(19) Europäisches Patentamt
European Patent Office
Office européen des brevets

(11) Veröffentlichungsnummer: **0 022 921**
**B1**

(12) **EUROPÄISCHE PATENTSCHRIFT**

(45) Veröffentlichungstag der Patentschrift: **26.10.83**

(51) Int. Cl.³: **C 25 C 3/12, C 25 C 7/02**

(21) Anmeldenummer: **80103126.1**

(22) Anmeldetag: **04.06.80**

(54) **Regenerierbare, formstabile Elektrode für Hochtemperaturanwendungen.**

(30) Priorität: **20.07.79 DE 2929346**
**05.01.80 DE 3000294**

(43) Veröffentlichungstag der Anmeldung:
**28.01.81 Patentblatt 81/4**

(45) Bekanntmachung des Hinweises auf die Patenterteilung:
**26.10.83 Patentblatt 83/43**

(84) Benannte Vertragsstaaten:
**AT BE CH FR GB IT LI NL SE**

(56) Entgegenhaltungen:
**AT - B - 339 061**
**DE - A - 2 059 866**
**DE - A - 2 547 168**

(73) Patentinhaber: **C. CONRADTY NÜRNBERG GmbH & Co KG**
**Grünthal 1-6**
**D-8505 Röthenbach a.d. Pegnitz (DE)**

(72) Erfinder: **Zöllner, Dieter H., Dr.**
**Händelstrasse 19**
**D-8501 Schwaig/b. Nürnberg (DE)**
Erfinder: **Zöllner, Christine M., Dr.**
**Händelstrasse 19**
**D-8501 Schwaig (DE)**
Erfinder: **Koziol, Konrad R.**
**Kirchhoffstrasse 16**
**D-8505 Röthenbach a.d.P. (DE)**
Erfinder: **Pilbrow, Malcolm F., Dr.**
**Kuhnhof 43**
**D-8560 Lauf a.d. Pegnitz (DE)**
Erfinder: **Lauterbach-Dammler, Inge, Dr.**
**Peter-Vischer-Strasse 15**
**D-8500 Nürnberg (DE)**

(74) Vertreter: **Tischer, Herbert, Dipl.-Ing. et al,**
**Patentanwälte Dipl.-Ing. Herbert Tischer Dipl.-Ing. Wolfgang Kern Albert-Rosshaupter-Strasse 65**
**D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 022 921 B1

# Regenerierbare, formstabile Elektrode für Hochtemperaturanwendungen

Die Erfindung betrifft eine regenerierbare, formstabile Elektrode für Hochtemperaturanwendungen, insbesondere für die Schmelzflußelektrolyse.

Bei der elektrolytischen Erzeugung von Aluminium, Magnesium, Natrium, Lithium und anderen Metallen sowie Verbindungen in technischem Maßstab werden heute vornehmlich Kohlenstoffelektroden aus amorpher Kohle oder Elektrographit verwendet. Diese Elektroden dienen hauptsächlich der Stromführung; darüberhinaus können sie aktiv an Elektrodenreaktionen beteiligt sein, etwa wie bei der Aluminiumerzeugung. Der tatsächliche Elektrodenverbrauch liegt in allen Anwendungsfällen weit über dem theoretisch vorgesehenen, was vor allem auf der Oxydationsanfälligkeit von Kohlenstoff bei höheren Temperaturen beruht. Man kann davon ausgehen, daß bei einem jährlichen Gesamtverbrauch von ca. 10 Mio t Kohlenstoff-Elektroden ca. 3 Mio t nutzlos durch Luftoxydation abgebrannt werden. Versuche, den Verbrauch durch oxydationshemmende Imprägnierung und Schutzüberzüge entscheidend zu senken, hatten nur geringen Erfolg.

Im Hinblick auf die steigenden Kosten für Graphit und Elektrodenkohlenstoff resultiert daraus ein Bedarf nach formstabilen Elektroden, die sich weniger verzehren.

Für Elektrodenanwendungen sind bereits eine Reihe keramischer Werkstoffe vorgeschlagen worden; vgl. beispielsweise die britische Patentschrift 1 152 124 (vorweigend stabilisiertes Zirkonoxid), die US-Patentschrift 4 057 480 (im wesentlichen Zinn(IV)oxid), die deutsche Offenlegungsschrift 27 57 808 (im wesentlichen Siliciumcarbid-Ventilmetallborid-Kohlenstoff), die südafrikanische Patentanmeldung 77/1931 (Yttriumoxid mit Oberflächenschichten aus Elektrokatalysatoren) oder die deutsche Offenlegungsschrift 24 46 314 (keramisches Grundmaterial mit Überzug aus Spinellverbindungen).

Die meisten keramischen Werkstoffe weisen auch nach Zusatz leitfähigkeitssteigernder Komponenten häufig nur eine mäßige bis mittlere elektrische Leitfähigkeit auf. Dies kann bei der Anwendung als Elektrodenmaterial hingenommen werden, solange die Elektrodenabmessungen gering, insbesondere der Strompfad kurz ist, wie das bei Elektroden für wässrige Elektrolyten zumeist der Fall ist. Elektrisch gut leitende Hochtemperaturkeramiken mit der zu fordernden chemischen Beständigkeit sind recht teure Werkstoffe.

Die klassische Hochtemperaturelektrode aus graphitischem oder nicht-graphitischem Kohlenstoff hat meistens die Form eines Zylinders oder eines Rechteckblockes, jeweils mit erheblichen Abmessungen; die Abmessungen für typische Elektroden zur Magnesiumerzeugung betragen 80 × 40 × 1800 mm; Elektroden für die Aluminiumerzeugung können Abmessungen bis zu 2250 × 750 × 950 mm aufweisen. Die Herstellung derartiger Massivblöcke aus den genannten keramischen Werkstoffen ist teuer und schafft erhebliche Schwierigkeiten hinsichtlich der Temperaturwechselbeständigkeit und des elektrischen Innenwiderstandes.

Weiterhin ist die Lebensdauer der genannten keramischen Werkstoffe unter typischen Schmelzelektrolysebedingungen infolge der hohen Temperaturen, der auftretenden aggressiven Medien und/oder der hohen Strombelastung begrenzt. In der Praxis werden Abnutzungsraten zwischen 0,7 und 10 g pro 100 h Elektrolysedauer festgestellt. Im Hinblick auf die hohen Anlagekosten besteht der Wunsch, die Lebensdauer von Elektroden für Hochtemperaturanwendungen zu erhöhen. Selbst bei gesteigerter Lebensdauer ist es wünschenswert, die Elektrode regenerierbar auszugestalten, worunter die erneute Anbringung von bzw. Beschichtung mit keramischem Material verstanden wird.

Davon ausgehend besteht die Aufgabe dieser Erfindung darin, eine neuartige Elektrode für Hochtemperaturanwendungen, insbesondere die Schmelzelektrolyse bereitzustellen, welche Elektrode eine höhere elektrochemische Aktivität, einen geringeren elektrischen Innenwiderstand sowie eine höhere Lebensdauer aufweist, und welche Elektrode darüberhinaus leicht regenerierbar ist.

Die erfindungsgemäße Lösung dieser Aufgabe ist eine Elektrode mit den in Anspruch 1 angegebenen Merkmalen. Vorteilhafte Ausgestaltungen und Weiterbildungen der erfindungsgemäßen Elektrode ergeben sich aus den Unteransprüchen.

Die Realisierung der Erfindung beruht hauptsächlich auf zwei Gesichtspunkten, nämlich

a) der Anwendung eines besonderen Elektrodenwerkstoffes; und

b) der aus diesem besonderen Elektrodenwerkstoff resultierenden Möglichkeit der Formgebung.

Der erfindungsgemäß vorgesehene Elektrodenwerkstoff ist ein Verbundwerkstoff aus anorganischen, den elektrischen Strom leitenden Fasern und wenigstens einem elektrochemisch aktiven Material.

Als Faserwerkstoffekommen typischerweise Kohlenstoff, Bor, Carbide wie Siliciumcarbid, Tantalcarbid oder Wolframcarbid, sowie unterstöchiometrische Carbide von Tantal und Niob, gegebenenfalls im Gemisch mit Kohlenstoff, in Betracht. Diese Faserwerkstoffe können in monokristalliner oder polykristalliner Form vorliegen und gewährleisten aufgrund ihrer hohen elektrischen Leitfähigkeit einen geringen elektrischen Widerstand über die gesamte Faserlänge. Diese Fasern sind in erheblichem Umfang dazu bestimmt, die gleichmäßige unde gute Verteilung des Stromes innerhalb der elektrode vorzunehmen, und den Strom in der gewünschten Weise zur aktiven Fläche an der äußeren Deckschicht der Fasern zu leiten.

Als elektrochemisch aktives Material kommen vor allem hochschmelzende, chemisch beständige, elektrische Ladung transportierende Stoffe in Betracht, beispielsweise Metallcarbide, Metallboride, Metallnitride und gegebenenfalls auch elementares Metall, hier insbesondere Tantal und Tantalverbindungen, wie Tantalcarbid und Tantaloxid, ferner bestimmte Bariumtitanate oder ausgewählte "Cermet"-Materialien aus zwei verschiedenen Metallen und einem übergangsmetalloxid. Diese elektrochemisch aktiven Materialien können als Beschichtung auf den Fasern aufgebracht sein, oder die Fasern können in eine Einbettmasse aus einem oder mehreren elektrochemisch aktiven Materialien eingebettet sein, oder die mit elektrochemisch aktivem Material beschichteten Fasern können in eine Einbettmasse aus gleichem oder unterschiedlichem elektrochemisch aktiven Material eingebettet sein.

Die Fasern weisen vorzugsweise erhebliche Länge in der Größenordnung von einigen cm bis zu der max. Elektrodenabmessung auf, und sind im wesentlichen einheitlich im Verbundwerkstoff angeordnet, so daß der Verbundwerkstoff eine Vorzugsrichtung aufweist, welche der Faserlängrichtung entspricht. Damit weist der Verbundwerkstoff in dieser Vorzugsrichtung einen besonders geringen elektrischen Widerstand auf.

Dank der hohen elektrischen Leitfähigkeit und hohen Festigkeit erlaubt dieser Verbundwerkstoff das Abgehen von der bisher üblichen Massivbauweise bei der Herstellung von Hochtemperaturelektroden. Vielmehr sind erfindungsgemäße Elektroden aus einer Anzahl Rohre, Stäbe und/oder Platten gebildet, welche Rohre, Stäbe und Platten ihrerseits aus dem Verbundwerkstoff bestehen und eine relative geringe Wandstärke aufweisen. Diese Bauweise gewährleistet bei verringertem Materialbedarf ein erheblich vergrößerte aktive Elektrodenoberfläche. Beispielsweise können die Rohre, Stäbe und Platten ihrerseits einen porösen, durchbrochenen oder netzartigen Aufbau besitzen, woraus eine besonders große Fläche für den Stromtransport zwischen Elektrolyt und Elektrode resultiert, was wiederum die lokale Stromdichte vermindert und die Lebensdauer der Elektroden erhöht. Die einzelnen Elektrodenelemente können bei geringen Aufwand mittels herkömmlicher Formen, Werkzeuge und dgl. gefertigt werden, und dann zu der jeweils geforderten Elektrodenform zusammengefaßt werden. Damit kann die erfindungsgemäße Elektrode besonders einfach an die verschiedenen Schmelzelektrolysen angepaßt werden und erlaubt vielseitige Hochtemperaturanwendungen.

Nachfolgend wird die Erfindung im einzelnen anhand von bevorzugten Ausführungsformen unter Bezugnahme auf die Zeichnungen erläutert; es zeigt:

Fig. 1 einen Ausschnitt aus einer erfindungsgemäßen Elektrode, die aus einer Kombination von dickwandigen Rohren 1 besteht. Das Rohrinnere 2 ist hohl und erlaubt die Zuführung bzw. Ableitung von Gasen. Benachbarte Rohre 1 berühren sich an der Rohraußenwand und sind dort miteinander verbunden, beispielsweise durch eine Sinterverbindung.

Fig. 2 einen Ausschnitt aus einer erfindungsgemäßen Elektrode, die aus einer Anzahl Sechskantstäbe 3 gebildet ist. Benachbarte Sechskantstäbe liegen längs entsprechender Seiten aneinander an, so daß ein Block, eine Reihe oder eine sonstige, ein große Oberfläche gewährleistende Anordnung erhalten wird. Durch Weglassen einzelner Sechskantstäbe innerhalb des Blockes können Kanäle für eine geregelte Gasführung geschaffen werden.

Fig. 3 einen Ausschnitt aus einer erfindungsgemäßen Elektrode, die aus einer Kombination einander berührender Rundstäbe 4 und Rohre 1 gebildet ist.

Fig. 4 eine andere Ausführungsform erfindungsgemäßer Elektroden, bestehend aus einer Kombination von Platten 5 und dünnwandigen Rohren 6. Die Rohre 6 halten die Platten 5 im Abstand zueinander; sämtliche Elektrodenelemente sind längs ihrer Berührungsflächen miteinander verkittet.

Fig. 5 eine weitere Ausführungsform erfindungsgemäßer Elektroden, bestehend aus einer Platte 7, von deren Hauptfläche eine Anzahl Rundstäbe 8 rechtwinklig abstehen. Die anliegenden Stirnflächen der Rundstäbe 8 sind mit der Plattenhaupfläche elektrisch leitend verbunden, so daß die Platte 7 eine gleichmäßige Stromzuführung zu den einzelnen Rundstäben 8 gewährleistet.

Fig. 6 eine weitere Ausführungsform erfindungsgemäßer Elektroden, bestehend aus einer Kombination von Platten 9 und Rundstäben 10. Die in ihren Abmessungen übereinstimmenden Platten 10 sind zu einem Stapel zusammengefaßt und weisen fluchtende Bohrungen auf, in welche die Rundstäbe 10 eingesetzt sind. Die Rundstäbe 10 dienen der Halterung und besorgen die Stromzuführung zu jeder einzelnen Platte 9.

Fig. 7 in einer Schnittdarstellung die Anordnung der Fasern innerhalb eines Rundstabes 4. Ersichtlich sind die einzelnen Fasern, Drähte, Faserbündel oder Drahtbündel 11 gleichmäßig über die Querschnittsfläche verteilt und verlaufen im wesentlichen parallel zur Längsachse des Rundstabes 4. Die einzelnen Fasern 11 od. dgl. sind in das elektrochemisch aktive Material 12 eingebettet.

·Fig. 8 eine Schnittdarstellung eines weiteren Rundstabes 4', der eine Kernzone 13 und eine konzentrisch dazu angeordnete Mantelzone 14 aufweist. Über die Querschnittsfläche der Kernzone 13 sind gleichmäßig Fasern, Drähte, Faserbündel oder Drahtbündel 11 verteilt, die im wesentlichen parallel zur Längsachse des Rundstabes 4' verlaufen. Das die Fasern 11 od. dgl. umgebende elektrochemisch aktive Material 12 in der Kernzone 13 unterscheidet sich vom elektrochemisch aktiven Material der Mantelzone 14, welche frei von Fasern 11 od. dgl. ist.

Fig. 9 in schematischer Darstellung als Teil einer erfindungsgemäßen Elektrode ein dickwandiges Rohr 1, dessen Wand aus elektrochemisch aktivem Material besteht, in das beschichtete Kurzfasern 15 eingebettet sind. Die Beschichtung 16 auf dem Faserkern 17 kann aus einer haftvermittelnden

Zwischenschicht oder aus einem elektrochemisch aktiven Belag bestehen. Die Kurzfasern 15 sind in Wirrfaserlage innerhalb der Einbettmasse aus elektrochemisch aktivem material verteilt.

Fig. 10 Eine Schnittdarstellung eines dünnwandigen Rohres 6 als Teil einer erfindungsgemäßen Elektrode. Die Rohrwand besteht aus einem Verbundwerkstoff aus Fasern und elektrochemisch aktivem Material. Die einzelnen Fasern oder Faserbündel 11 sind gleichmässig über die Querschnittsfläche der Rohrwand verteilt und verlaufen im wesentlichen parallel zur Rohrlängsachse.

Fig. 11 Die Schnittdarstellung eines Sechskant-Stabes 3 als Teil einer erfindungsgemäßen Elektrode, der analog zum Rundstab 4 nach Fig. 7 aufgebaut sit. Wiederum verlaufen die Fasern 11 o.dgl. parallel zur Stablängsachse und sind in das elektrochemisch aktive Material 12 eingebettet.

Fig. 12 eine Vorstufe bei der Fertigung einer Erfindungsgemäßen Elektrode in Form dünnwandiger Rohre. Hier ist ein endloser Faserstrang 18 fortlaufend schraubenförmig um einen später entfernbaren Dorn 19 gewickelt. Auf der Dornmantelfläche wird nachfolgend elektrochemisch aktives Material aufgebracht und darin die Faserstrangwindungen eingebettet. Nach der Aushärtung des elektrochemisch aktiven Materials wird der Dorn 19 entfernt.

Die Elektrodenelemente der dargestellten und weiterer erfindungsgemäßer Elektroden bestehen aus dem erfindungsgemäß vorgesehenen Werkstoff, nämlich einem Verbundwerkstoff aus anorganischen, den elektrischen Strom gut leitenden Fasern und wenigstens einem elektrochemisch aktiven Material.

Geeignete Fasern sind handelsüblich zugänglich, beispielsweise in der Form von Kohlenstoffasern, wie sie von Greatlakes Carbon Corporation unter der Handelsbezeichnung "Fortafil" vertrieben werden; Diese Fasern (Fortafil 3 bzw. 4) besitzen eine Zugfestigkeit von 2.500 bzw. 2.800 $N/mm^2$, eine Dichte von 1,73 bzw. 1,80 $g/cm^3$ und einen spezifischen elektrischen Widerstand von 18 bzw. 10 $\Omega\ mm^2/m$. Gut geeignet sind ferner auch die von C. Conradty Nürnberg GmbH & Co. KG unter der Handelsbezeichnung "CECOTEX" vertriebenen Kohlenstoff- bzw. Graphitfasern, die beispielsweise in Form von Filz oder Kordel zur Verfügung stehen; Eine solche Cecotex-Kordel weist eine Reißlast von 35 bis 50 N, eine Dichte von 0,1 bis 0,4 $g/cm^3$ und einen spezifischen elektrischen Widerstand von etwa 100 bis 200 $\Omega\ mm^2/m$ auf.

Zweckmäßigerweise haben geeignete Fasermaterialien einen Schmelz- bzw. Erweichungspunkt zwischen 2.300 und 3.600°C, eine Dichte zwischen 1,7 und 19 $g/cm^3$ und eine Biegefestigkeit von etwa 1.500 bis 4.000 $N/mm^2$. Typische Eigenschaften brauchbarer Fasermaterialien sind in der folgenden Tabelle angegeben:

| Fasermaterial | Schmelz- oder Erweichungs-Temp. (°C) | Dichte ($g/cm^3$) | Elastizitäts-Modul ($N/mm^2$) |
|---|---|---|---|
| Bor/Wolfram | 2300 | 2,70 | 400.000 |
| SiC/Wolfram | 2700 | 3,50 | 450.000 |
| Zirkondioxid | 2700 | 4,84 | 350.000 |
| Kohlenstoff | 3600 | 1,75 bis | 260.000 bis |
| | | 1,95 | 380.000 |
| Kohlenstoff/Bor/Carbid | 3000 | 2,25 | 400.000 |
| SiC-Whisker | 2690 | 3,21 | 500.000 |
| Kohlenstoff-Whisker | 4000 | 2,20 | 1.000.000 |

Geeignete Fasermaterialien können in monokristalliner, polykristalliner oder amorpher Form vorliegen. Beispielhafte monokristalline Fasern sind die bekannten Whisker, etwa aus Siliciumcarbid (SiC) oder Borcarbid ($B_4C$), die infolge ihrer außerordentlichen Festigkeitswerte neben der elektrischen Leitfähigkeit auch als strukturtragendes Element bzw. Gerüstmaterial dienen. Geeignete polykristalline Fasern können einphasig ($ZrO_2$, $B_4C$) oder mehrphasig (B/W, $B_4C$/W, SiC/W oder $TiB_2$/W) vorliegen. Brauchbare amorphe Fasern sind schließlich die bereits genannten Kohlenstoffasern.

Bevorzugte Fasermaterialien sind Kohlenstoff (C); Bor (B) und/oder Siliciumcarbid (SiC); Tantalcarbid (TaC) oder Wolframcarbid (WC); ein Gemisch aus Kohlenstoff und unterstöchiometrischem Tantalcarbid ($TaC_{x\ bis\ 1}$); ein Gemisch aus unterstöchiometrischem Tantalcarbid ($TaC_{x\ bis\ 1}$) und unterstöchiometrischen Niocarbid ($NbC_{x\ bis\ 1}$) und schließlich ein Gemisch aus unterstöchiometrischem Tantalcarbid ($TaC_{x\ bis\ 1}$), unterstöchiometrischem Niocarbid ($NbC_{x\ bis\ 1}$) und Kohlenstoff.

Ein beispielhaftes Verfahren zur Herstellung geeigneter Fasern ist aus der US-Patentschrift 3 403 008 bekannt. Danach wird vorgeformtes organisches Polymerisat mit hydrolysierend wirkenden

Metallhalogeniden getränkt, das getränkte Material unter Erwärmung zur Kohlenstoffstufe, gegebenenfalls mit Oxideinlagerungen umgesetzt, und das erhaltene Gemisch schließlich zum entsprechenden Metallcarbid umgesetzt. Auf diese Weise werden Fasern, Webware u. dgl. aus Uran-, Wolfram-, Silicium-, Titan-, Zircon- und Borcarbid sowie aus deren Gemischen erhalten.

Das Fasermaterial kann in Gestalt von Einzelfasern, Fasersträngen, Kordeln, Filzen, Geweben oder also Kurzfasern vorliegen, Vorzugsweise sind Faserstränge, oder Kordeln solcher Länge vorgesehen, daß sich die Fasern ununterbrochen von einem Ende zum anderen Ende der Rohre und Stäbe erstrecken. Zur Herstellung von Platten kann eine Gewebe- oder Filzbahn als Gerüstkörper dienen. Die Herstellung der Fasern und Drähte kann nach üblichen Maßnahmen erfolgen, beispielsweise durch Schmelzspinn-, Extrusions- und Ziehverfahren, an die sich eine thermische Nachbehandlung anschließen kann. Beispielsweise können Oberflächencoatings nachträglich aufgedampft werden, wobei es zu nachgeschalteten Reaktionsvorgängen mit dem Fasermaterial kommen kann.

Neben dem Fasermaterial enthält der erfindungsgemäß vorgesehene Verbundwerkstoff ein oder mehrere elektrochemisch aktive Materialien. Hierunter werden Materialien verstanden, welche die chemische Beständigkeit der Elektroden unter den Hochtemperaturbedingungen bezüglich der Elektrolyseprodukte gewährleisten, und für einen guten Stromtransport zwischen Fasermaterial und Elektrolyt, Salzschmelze od. dgl. sorgen. Das elektrochemisch aktive Material verringert die Überspannung und weist gegebenenfalls zusätzlich katalytische Eigenschaften auf.

Zu geeigneten elektrochemisch aktiven Materialien gehören Metallcarbide, Metallboride, Metallnitride und/oder elementares Metall. Hierbei kann das elektrochemisch aktive Material seinerseits aus einem Gemisch mehrerer Komponenten bestehen sowie auf den Fasern in Form von mehreren Schichten unterschiedlicher Zusammensetzung vorliegen.

Bevorzugte elektrochemisch aktive Materialien sind Tantalcarbid, einzelne oder mehrere Bariumtitanate und Cermet-Materialen aus zwei Metallen und einem Übergangsmetalloxid. Geeignete Bariumtitanate sind in einem Beitrag von J. G. Dickson, L. Katz und R. Word in J.A.C.S. *83*, S. 3026 (1961) beschrieben und weisen beispielsweise die nachfolgenden Zusammensetzungen auf:

$$Ba(Pt_{0.1}Ti_{0.9})O_3,$$

$$Ba(Ru_{0.3}Ti_{0.7})O_3,$$

$$Ba(Pt_{0.2}Ti_{0.8})O_3 \text{ oder}$$

$$Ba(Pt_{0.25}Ti_{0.75})O_3$$

Weitere elektrochemisch aktive Komponenten dieses Typs sind in der deutschen Offenlegungsschrift 23 54 477 angegeben.

Ein besonders bevorzugtes elektrochemisch aktives Material ist Tantalcarbid, insbesondere als Beschichtung auf Kohlenstoffasern. Tantalcarbid ist im Bereich hoher Temperaturen gegen viele Metallschmelzen und nicht oxidierende Salzschmelzen beständig, wird dagegen von oxidierenden Salz- und Alkalischmelzen angegriffen. Bei Temperaturen oberhalb 400°C erfolgt an Luft sehr heftige Reaktion mit Sauerstoff; für den Einsatz bein elektrochemischen Hochtemperaturprozessen ist daher eine vorherige Oberflächenoxidation der Gesamtelektrode empfehlenswert.

Die physikalischen Eigenschaften, die chemische Beständigkeit und die elektrochemische Aktivität von Tantalcarbid (TaC) lassen sich durch Verringerung des Kohlenstoffgehaltes beeinflussen, wobei man zu unterstöchiometrischen Tantalcarbiden ($TaC_{x\ bis\ 1}$) einer Zusammensetzung zwischen $Ta_2C$ ($x = 0{,}5$) und TaC ($x = 1$) entsprechend dem vollbesetzten Gitter kommt. Beispielsweise liegt der Schmelzpunkt von $TaC_{0{,}85}$ oberhalb von 4000°C. Derartige unterstöchiometrischen Tantalcarbide stellen ein besonders bevorzugtes Beschichtungsmaterial dar.

Zur Herstellung können mit Tantal oder Tantaloxid bedampfte oder plasmagespritzte Kohlenstoffasern im Vakuum oder unter Schutzgas auf 1600 bis 1900°C erhitzt werden; dabei erfolgt eine Umsetzung entsprechend

$$n\,Ta_2O_5 + m\,Ta + (7n + m)\,C \rightarrow (2n + m)\,TaC + 5nCO.$$

Ähnliche Verhältnisse bestehen bei den isotypischen Carbiden von Niob, Molybdän und Wolfram, welche daher ebenfalls geeignete Beschichtungsmaterialien insbesondere für Kohlenstoffasern darstellen.

Weitere besonderes bevorzugte elektrochemisch aktive Materialien sind Cermet-Materialien aus einem Übergangsmetalloxid und zwei verschiedenen Metallen, insbesondere Übergangsmetallen. Gut bewährt haben sich insbesondere ein Cermet aus Nickel, Silber und Yttriumoxid oder ein Cermet aus Nickel, Palladium und Yttriumoxid. Derartige Cermet-Materialien eignen sich insbesondere für die Beschichtung von Zirkondioxidfasern.

Ferner sind eine Reihe der keramischen Materialien, wie sie in den eingangs genannten Patentpublikationen aufgeführt sind, auch im Rahmen dieser Erfindung als elektrochemisch aktives Material

brauchbar; dies trifft beispielsweise für Verbindungen des Typs $SnO_2 \cdot Fe_2O_3$, $NiO \cdot Fe_2O_3$ und $Zn \cdot Fe_2O_3$ zu, wie sie in der US-Patentschrift 4 057 480 beschrieben sind, oder für keramische Werkstoffe aus Yttriumoxid mit wenigstens einem weiteren elektrisch leitenden Oxid, wie sie in der südafrikanischen Patentanmeldung Nr. 77/1931 beschrieben sind; brauchbare keramische Materialen sind ferner in der französischen Patentanmeldung 75.32 354 beschrieben.

Das erfindungsgemäß vorgesehene elektrochemisch aktive Material schützt das Fasermaterial vor den aggresiven Medien, die unter den Elektrolysebedingungen auftreten, und gewährleistet den Stromtransport zwischen Fasermaterial und Elektrolyt, Salzschmelze od. dgl. Hierzu soll das elektrochemisch aktive Material das Fasermaterial möglichst weitgehend bedecken. Vorzugsweise sollen wenigstens 40 % der Faseroberfläche bedeckt sein. In der Praxis erweist sich eine gute Oberflächenbedeckung von Fasern, Geweben oder Filzen aus anorganischem Material mit keramischen Werkstoffen als schwierig. Vorschläge zur Lösung dieses Problems werden beispielsweise in einem Beitrag in Ber. Dt. Keram. Ges. *55*, S. 265 (1978) gemacht. Zur Verhinderung eines Fadenbruches von SiC-beschichteten Kohlenstoffasern wird beispielsweise vorgeschlagen, diese in Kieselsäureester einzutauchen und an feuchter Luft zu hydrolisieren. Hierbei bildet sich galertartiges $SiO_2$, das die Fasern benetzt und die Faserstränge gleichmäßig infiltriert, so daß man bis zu einer 100%igen Faserbedeckung kommen kann. Weiterhin kann die Verwendung von Zwischenschichten, insbesondere aus Titannitrid (TiN) zweckmäßig sein; es lassen sich Faserbedeckungen von etwa 75 % erzielen; bei anoxydierten SiC-Fasern lassen sich Faserbedeckungen von etwa 50 bis 80 % der Faseroberfläche erreichen.

Eine weitere Verbesserung der erfindungsgemäßen Elektroden kann durch die zusätzliche Einbettung von chemisch und thermisch stabilen Carbiden und/oder Nitriden in die Oberfläche der Elektrode mittels Haftvermittler erzielt werden; so können beispielsweise die Carbide von Bor, Titan, Zirkon, Niob, Tantal, Thorium sowie die Nitride von Titan, Zirkon, Niob oder Boride von Titan und Zirkon, sowie Oxide von Zirkon oder Edelmetalle wie Platin, Palladium u.dgl. in das elektrochemisch aktive Material eingebettet werden, um dessen elektrochemische Eigenschaften an bestimmte Anforderungen anzupassen.

Nachfolgend sind bevorzugte Kombinationen von Fasermaterial und elektrochemisch aktivem Material angegeben:

Kohlenstoff-Fasern mit einer Tantalcarbid-Auflage, die erneut mit Tantal überzogen ist, das oberflächlich in Oxid umgewandelt ist;

Kohlenstoff-Fasern mit einer Tantalcarbid-Auflage und einer weiteren Deckschicht aus Cermet-Material, beispielsweise aus Platin/Tantaloxid, Platin/Tantalcarbid, Platintitandiborid oder ähnlichen Cermet Materialien, bei denen Platin durch andere Metalle der Platingruppe ersetzt ist;

Wolfram-carbidfasern, die mit Bor oder Bor- und Siliziumcarbid beschichtet sind (sogenannte Borsic-Filamente);

Tantalcarbid-Netze, beschichtet mit Tantal und Tantaloxid;

Titandiborid-Fasern oder Titancarbidfasern, beschichtet mit Tantalcarbid und Tantaloxid;

Zirkonoxid-Fasern, beschichtet mit Titanborid; sowie

Zirkondioxidfaser beschichtet mit einem Cermet-Material aus Nickel, Silber und Yttriumoxid, vorzugsweise einer Mischung aus 40 % Yttriumoxid, 50 % Nickel und 10 % Silber.

Der erfindungsgemäß vorgesehene Verbundwerkstoff kann aus den genannten Fasermaterialien und elektrochemisch aktiven Materialien nach bekannten Verfahren erhalten werden. Beispielsweise werden die Ausgangsmaterialien mittels Kaltpressung (Strang-Block- oder Iso-Pressung) in die gewünschte Form der Rohre, Stäbe oder Platten gebracht und diese vorgeformten Elektrodenelemente anschliessend heiß gesintert. Alternativ können die Elektrodenelemente direkt durch Heißisopressung erzeugt werden. Weitere Einzelheiten zur Herstellung ergeben sich aus den nachfolgenden Beispielen.

Nach einer alternativen Ausführungsform werden aus anorganisch beschichtetem Wolframgewebe Rohre oder Stäbe geformt, die dann in bekannter Weise in der Hitze mit $BCl_3$ oder ähnlichen gasförmigen Borverbindungen zur Borierung behandelt werden. Dies kann in ähnlicher Weise auch mit einem ganzen Gewebe-Rohr-Bündel, Gewebe-Stab-Bündel oder Matten-Bündel erfolgen.

Diese elektrisch gut leitenden, dank ihrer Beschichtung gegen den Angriff von Komponenten aus hochtemperaturelektrolytischen Prozessen resistenten Faserstoffe werden gegebenenfalls mit gleichen oder anderen elektrochemisch aktiven Komponenten umsinternd bedeckt und darin eingebettet.

Die Beschichtung und/oder die Einbettmasse, jeweils aus elektrochemisch aktivem Material, ist dem Angriff der reaktionsfähigen Komponenten des Elektrolysegeschehens ausgesetzt. In der Praxis zeigt sich, daß es empfehlenswert ist, nach einem Betrieb von mehreren Jahren das aktive System der Elektrode, nämlich das den elektrischen Strom hauptsächlich führende Gerüst aus Fasermaterial erneut zu umsintern. Dadurch wird die Elektrode reaktiviert. Der erfingungsgemäße Aufbau der Elektrode aus einer Kombination von Rohren, Stäben und/oder Platten erlaubt eine besonders einfache Form der Regenerierung, da es lediglich erforderlich ist, auf dem Gerüstmaterial frisches elektrochemisch aktives Material aufzubringen und aufzusintern.

Die einzelnen elektrodenelemente, nämlich die Rohre, Stäbe oder Platten, können zur Bereitstellung der fertigen Elektrode in beliebiger Form zu Bündeln zusammengefaßt werden, welche ihrerseits aus den Rohren, Stäben, Platten oder deren Kombinationen bestehen. Der Zusammenhalt der einzelnen Elektrodenelemente untereinander kann über eine Sinterverbindung erfolgen, durch aufgebrachten Kitt oder sonstige anorganische Klebemittel. Vorzugsweise ist eine elektrisch leitende Verbindung zwischen den einzelnen Elektrodenelementen vorgesehen, um eine gleichmäßige Stromverteilung innerhalb der gesamten Elektrode zu gewährleisten.

Die folgenden Beispiele dienen zur weiteren Erläuterung der Erfindung, ohne diese einzuschränken.

Beispiel 1

5 kg platinierte Kohlenstoff-Kurzfasern, 1 kg Zinkoxid, 40 kg Zinnoxid und 4 kg Phenolharz werden sorgfältig miteinander vermischt, und das erhaltene Gemisch bei Raumtemperatur zu Rundstäben, Sechskantstäben oder Rohren extrudiert. Durch die Extrusion findet eine Ausrichtung der Kurzfasern in Preßrichtung statt. Die extrudierten Körper werden eine Zeit lang bei Temperaturen bis max. 250°C gehalten, um das Hilfsbindemittel (Phenolharz) zu kondensieren und auszuhärten. Anschliessend werden die vorgeformten Elektrodenelemente 18 h lang bei 1000 bis 1100°C gesintert. Sofern die Elektrodenelemente bei dieser Sinterung einander berührend angeordnet gehalten werden, erfolgt eine Zusammensinterung der Elektrodenelemente zur fertigen Elektrode.

Beispiel 2

Wie es oben angegeben ist, wird, auf Kohlenstoff-Fasern eine Beschichtung aus unterstöchiometrischen Tantalcarbid (der ungefähren Zusammensetzung $TaC_{0,85}$) aufgebracht. Der Tantalcarbidbelag wird teilweise mit einer Deckschicht aus Platin versehen. 3 kg dieser Fasern werden mit 2 kg Bariumtitanat (der Zusammensetzung $Ba(Pt_{0,1}Ti_{0,9})O_3$), 19 kg Zinnoxid und 1 kg Yttriumoxid vermischt. Der gesamte Ansatz von 25 kg wird bei 1400°C 24 h lang zu Platten und Stäben sintergepresst.

Beispiel 3

0,1 kg Borfasern, 0,1 kg Siliziumcarbidfasern, 3 kg Tantalpulver und 0,3 kg Phenolharz werden sorgfältig mit einander vermischt, und das erhaltene Gemisch kaltisostatisch zu Sechskantstäben gepresst. Die erhaltenen Stäbe werden mässig erwärmt, um das Phenolharz zu kondensieren und auszuhärten. Danach werden die Stäbe in Graphitpulver eingebettet und unter Argonschutzgas 24 h lang auf 1800°C erhitzt. Hierbei entsteht ein Verbundwerkstoff mit Tantalcarbidoberfläche.

Beispiel 4

Rovings aus Kohlenstoff-Fasern werden mittels bekannter Maßnahmen (beispielsweise Wetwindung) zu einem mehrdirektional gerichteten skelett verarbeitet, dessen elektrisch leitende Vorzugsrichtung in der Längsachse liegt. Das Skelett wird mit einem Gemisch aus Pech und Schwefel stabilisiert und in dieser Form zu Rohren gewickelt und danach ausgehärtet. Mittels einer Vakuum-Druck-Imprägnierung wird auf diese Rohre ein Tränkmittel aufgebracht. Das Tränkmittel besteht aus einer Aufschlämmung von Furfurylalkohol/Phenolharz/Zirkondioxid und Palladiumpulver in der Tränkflüssigkeit (mit einem Zirkondioxidanteil von 30 % und einem Palladiumanteil von 10 %). Anschießend word bei mäßig hohen Temperaturen thermisch ausgehärtet und danach im Verlauf von 24 h eine Hochtemperatursinterung im Vakuum-Induktionsofen bei 1800°C durchgeführt.

Beispiel 5

Man gibt 30 kg Zinnoxid ($SnO_2$), 7 kg Yttriumoxid ($Y_2O_3$), 5 kg Braunstein ($MnO_2$) und 2 kg Wismuthoxid ($Bi_2O_3$) in eine Kugelmühle und führt 100 Min. lang eine Naßmahlung durch. Danach wird ein Schlicker mit einer Viskosität von etwa 0,2 bis 1,0 Poise (bei 20°C) erhalten. In diesen Schlicker werden anschließend 5 kg versilberte Kohlenstoffasern eingerührt und die gesamte Aufschlämmung bei 110°C getrocknet. Die erhaltene Masse wird erneut zerkleinert, aufgemahlen, gesiebt und nach zusätzlicher Einbringung von versilberten Kohlenstoffasern im Zentrum der Preßform 24 h lang bei 1400°C heißisostatisch zu Elektrodenelementen verpreßt. Damit erhält man eine zentrisch elektrisch gut in Längsrichtung leitende Elektrode, deren äußere Partien ebenfalls von versilberten Kohlenstoffasern durchsetzt sind.

Beispiel 6

30 kg Zinnoxid ($SnO_2$), 3 kg Silberoxid ($Ag_2O$), 3 kg Rutheniumoxid ($RuO_2$) und 4 kg Kobaltoxid ($Co_2O_3$) werden im Dispergator im Kreislaufverfahren bei 8000 U/min miteinander vermischt, und das erhaltene Gemisch anschliessend 100 min. lang in einer Kugelmühle nass vermahlen. Die erhaltene Aufschlämmung wird thermisch eingedickt bis einer Viskosität des Schlickers von 2,5 bis 4,5 P se (bei 20°C) erreicht ist. Danach wird die Masse sprühgetrocknet (bei etwa 390—410°C). Hierbei werden Granulatteilchen mit einer mittleren Teilchengröße von etwa 0,1 vis 0,3 mm erhalten. Dieses Granulat wird auf ein Mischgewebe aus metallisch leitenden Fasern, wie versilberten Kohlenstoffasern, die mit einem Rutheniumoxidcoating versehen sind, unter Druck heißisostatisch aufgesintert, um entsprechende Elektrodenelemente zu erhalten.

Beispiel 7

Zirkondioxidfasern mit einem Schmelz- und Erweichungspunkt von etwa 2700°C, einer Dichte

von 4,84 g/cm³ und einem Elastizitätsmodul von 350 000 N/mm² werden mit einem pulverförmigen Cermet-Material aus 40 % Yttriumoxid, 50 % Nickel und 10 % Silber (also einer Substanzkombination $(Y_2O_3)_{0,4}(Ni)_{0,5}(Ag)_{0,1}$) vermischt und aus diesem Gemisch mittels Kaltpressung (Strang-, Block- oder Isopressung) Rohre, Stäbe oder Platten erzeugt. Diese Elektrodenelemente werden anschliessend heiß gesintert; beispielsweise werden Stäbe mit einem Durchmesser von 10 mm erzeugt.

Ein Bündel aus solchen Stäben wurde zu einer Elektrode zusammengesintert und die erhaltene Elektrode in Schmelzelektrolysen eingesetzt; beispielsweise in eine Schmelze aus 32 % $AlCl_3$, 35 % NaCl und 33 % $BaCO_3$ bei einer Badtemperatur zwischen 690 und 720°C oder in eine Schmelze aus 42 % $MgCl_2$, 33 % KCl und 25 % NaCl bein einer Badtemperatur zwischen 650 und 700°C eingetaucht. Die Elektrolyse wurde bein einer Stromdichte von 0,75 A/cm² durchgeführt. Nach einer Elektrolysedauer von 100 Tagen konnte an der Elektrode kein messbarer Verschleiß festgestellt werden.

Beispiel 8

Mit einer Nickelschicht versehene Kohlenstoff-Fasern wurden in ein elektrochemisch aktives Cermet-Material aus 70 % Yttriumoxid, 45 % Nickel und 5 % Palladium eingebettet und dieser Verbundwerkstoff zu Elektrodenelementen geformt. Ein Bündel dieser Elektrodenelemente wurde zu einer Elektrode zusammengefasst und diese Elektrode in eine Schmelze aus 89 % $Na_3AlF_6$, 5 % $AlF_3$, 6 % $Al_2O_3$ oder in eine Schmelze aus 88 % $Na_3AlF_6$, 5 % $AlF_3$, 6 % $Al_2O_3$ und 1 % $LiCl_3$ eingetaucht. Die Schmelzelektrolyse wurde bei einer Stromdichte von 0,75 A/cm² durchgeführt. Nach einer Elektrolysedauer von 120 Tagen konnte an der Elektrode kein messbarer Verschleiß festgestellt werden.

Beispiel 9

An einer Anzahl erfindungsgemässer Elektroden wurde der Verschleiß in verschiedenen Elektrolyten unter Schmelzelektrolysebedingungen untersucht. Die Elektroden bestanden aus den nachfolgenden Verbundwerkstoffen:

a) Kohlenstoffasern mit einer Grundschicht aus Tantalcarbid, einer Zwischenschicht aus metallischem Tantal und einer Deckschicht aus Tantaloxid;

b) Kohlenstoffasern mit einer Grundschicht aus metallischem Platin und einer Deckschicht aus Titancarbid;

c) Bor-Siliziumcarbid-Fasern mit einer Grundschicht aus metallischem Platin und einer Deckschicht aus $Ba(Pt_{0,2}Ti_{0,8})O_3$; und

d) Zirkonoxidfasern mit einer Deckschicht aus Tantaloxid mit $Ta_2WO_8$.

Aus diesen Verbundwerkstoffen wurden Elektroden der nachfolgenden Formen geformt:

1) Elektroden aus einem zusammengefassten Rohrbündel; jedes Rohr hatte einen Rohrdurchmesser von 1 cm bei einem lichten Innenraum von 0,2 cm. Die Kontaktierung erfolgte mit Platindrähten oder platiniertem Eisen;

2) Elektroden aus zu einem Bündel zusammengefassten Rundstäben; jeder Stab hat einen Durchmesser von 1 cm; die Kontaktierung erfolgte mit platiniertem Eisen; und

3) Aneinandergeheftete Faserwerkstoffmatten mit einer Mattenstärke von 1 cm; die Kontaktierung erfolgte mittels Platin.

Die Schmelzelektrolyse wurde in Elektrolyten der nachfolgenden Zusammensetzung durchgeführt:

A) 89 % $Na_3AlF_6$, 5 % $AlF_3$, 6 % $Al_2O_3$ bei einer Badtemperatur von 880 bis 960°C;

B) 32 % $AlCl_3$, 35 % NaCl, 33 % $BaCO_3$ bei einer Badtemperatur von 690 bis 720°C;

C) 39 % $MgCl_2$, 61 % KCl bei einer Badtemperatur von 650 bis 700°C;

D) 42 % $MgCl_2$, 33 % KCl, 25 % NaCl bei einer Badtemperatur von 650 bis 700°C; und

E) einem Elektrolysten aus anfänglich einem Teil $CeCl_2$ auf einen Teil $CaCl_2$, dessen Zusammensetzung schrittweise auf vier Teile $CeCl_2$ auf einen Teil $CaCl_2$ verändert wurde; die Badtemperatur betrug 800 bis 950°C.

Im einzelnen wurden die Schmelzen in Elektrolysezellen aus Hartgraphittiegeln mit einem Fassungsvermögen von ca. 4 kg erzeugt, welche indirekt oder durch den direkten Stromdurchgang beheizt wurden. Als Kathode diente das Kohle/Graphit-Material des Tiegels. Dadurch wurden Elektrodenverhältnisse gewährleistet, wie sie heute in hochbelasteten Elektrolysezellen bestehen. Der Tiegelrand war mit einem angesinterten Gemisch aus hochgesintertem hocheinem $Al_2O_3$ geschützt, um unkontrollierte Rückreaktionen zu verhindern. Die jeweilige Elektrode (Durchmesser 5 cm) war bis zu einer Tiefe von 10 cm in die Schmelze eingesetzt. Die Elektrolyse erfolgte bei Stromdichten zwischen 0,5 und 1 A/cm². Nach einer Elektrolysedauer von jeweils 250 h wurde der in der nachstehenden Tabelle angegebene Verschleiß der einzelnen Elektroden ermittelt.

| Elektrode | Schmelze | Verschleiß (g/100 h) |
|---|---|---|
| 1 a | A | 0,12 |
| 1 a | C | 0,06 |
| 1 a | E | 0,08 |
| 1 b | A | 0,09 |
| 1 a | B | 0,05 |
| 2 c | A | 0,09 |
| 2 c | B | 0,05 |
| 2 a | B | 0,10 |
| 3 b | E | 0,12 |
| 3 a | E | 0,12 |

Ersichtlich liegt der Verschleiß dieser erfindungsgemässen Elektroden um etwa 0,1 g/100 h Elektrolysedauer. Für eine weitere Gruppe erfindungsgemässer Elektroden wurden Verschleißraten von etwa 0,05 bis 0,20 g/100 h Elektrolysedauer ermittelt. Damit weisen die erfindungsgemässen Elektroden einen erheblich geringeren Verschleiß als bekannte Elektroden auf, denn für die bislang bekannten Elektroden liegt die Verschleißrate bei etwa 0,7 bis 10 g/100 h Elektrolysedauer.

Die erfindungsgemässen Elektroden zeigen einen erheblich verringerten Innenwiderstand gegenüber bekannten gesinterten Elektroden aus Massivkeramik. Dies beruht auf den minimalen Stromleitwegen vom stromführenden Faserkern zur elektrochemisch aktiven Oberfläche und auf der erheblich vergrösserten elektrochemisch aktiven Oberfläche infolge der Porösstruktur des Verbundwerkstoffs. Damit weisen erfindungsgemässe Elektroden eine wesentlich höhere Standfestigkeit und höhere Beständigkeit gegenüber elektrochemischen und chemischen Angriffen an den Bindemitteln auf.

Schliesslich ist die Beständigkeit der erfindungsgemässen Elektroden gegen den bekannten heftigen chemischen Angriff bei Stromabschaltung erheblich vergrössert. Während bekanntlich bei $SnO_2$-Elektroden durch aluminothermische Reaktion bei Stromabschaltung häufig eine Zerstörung auftritt, wurden bei erfindungsgemässen Elektroden in keinen Falle ähnliche Erscheinungen beobachtet.

**Patentansprüche**

1. Regenerierbare, formstabile Elektrode für Hochtemperaturanwendungen, insbesondere für die Schmelzelektrolyse, bestehend aus einem anorganischen, den elektrischen Strom leitenden Material und wenigstens einem elektrochemisch aktiven Material, gekennzeichnet durch folgende Merkmale:

a) Das anorganische, den elektrischen Strom leitende Material liegt in Form von Fasern vor;

b) die Fasern sind zu Faserbündeln, Kordeln, Geweben und/oder Filzen zusammengefaßt;

c) die Fasern sind in wenigstens ein elektrochemisch aktives Material eingebettet;

d) die Elektrode hat die Gestalt von gruppenweise zusammengefaßten Stäben, Rohren und/oder Platten, einschließlich Kombinationen von Platten und Stäben und/oder Rohren sowie Kombinationen von Stäben mit Rohren;

e) die Längsrichtung der Fasern verläuft im wesentlichen in Stromführungsrichtung.

2. Elektrode nach Anspruch 1, dadurch gekennzeichnet, daß die Beschichtung aus einer oder mehreren Lagen, insbesondere aus Doppeldeckschichten besteht.

3. Elektrode nach Anspruch 1 oder 2, dadurch gekennzeichnet, daß auf den Fasern eine haftvermittelnde Zwischenschicht aufgebracht ist, welche die Haftung zur Faserbeschichtung oder zur Einbettmasse aus elektrochemisch aktivem Material erhöht.

4. Elektrode nach einem der Ansprüche 1 bis 3, dadurch gekennzeichnet, daß wenigstens 40 % der Faseroberfläche mit Haftvermittler und/oder elektrochemisch aktivem Material bedeckt sind.

5. Elektrode nach einem der Ansprüche 1 bis 4, dadurch gekennzeichnet, daß die Fasern bestehen aus:

a) Kohlenstoff (C); oder

b) Bor (B) und/oder Siliciumcarbid (SiC); oder

c) Tantalcarbid (TaC) oder Wolframcarbid (WC); oder

d) einem Gemisch aus Kohlenstoff und einem unterstöchiometrischen Tantalcarbid ($TaC_{x\ bis\ 1}$);

oder

e) unterstöchiometrischem Tantalcarbid ($TaC_{x\ bis\ 1}$) und unterstöchiometrischem Niobcarbid ($NbC_x$ bis 1); oder

f) unterstöchiometrischem Tantalcarbid ($TaC_{x\ bis\ 1}$) und unterstöchiometrischem Niobcarbid ($NbC_{x\ bis\ 1}$) und Kohlenstoff.

6. Elektrode nach Anspruch 5, dadurch gekennzeichnet, daß das Fasermaterial in monokristalliner oder polykristalliner Form vorliegt.

7. Elektrode nach einem der Ansprüche 1 bis 6, dadurch gekennzeichnet, daß das elektrochemisch aktive Material der Faserbeschichtung und/oder der Einbettmasse besteht aus:

a) einem Metallcarbid, Metallborid, Metallnitrid und/oder elementarem Metall; oder

b) Tantal, Tantalcarbid und/oder Tantaloxid; oder

c) einzelnen oder mehreren Bariumtitanaten der Zusammensetzung

$$Ba(Pt_{0.1}Ti_{0.9})O_3,$$

$$Ba(Ru_{0.3}Ti_{0.7})O_3,$$

$$Ba(Pt_{0.2}Ti_{0.8})O_3,$$

$$Ba(Pd_{0.25}Ti_{0.75})O_3;\ \text{oder}$$

d) einem Cermet aus zwei Metallen und einem Übergangsmetalloxid.

8. Elektrode nach Anspruch 7, dadurch gekennzeichnet, daß das elektrochemisch aktive Material (d) ein Cermet aus Nickel, Silber und Yttriumoxid ist.

9. Elektrode nach Anspruch 7, dadurch gekennzeichnet, daß das elektrochemisch aktive Material (d) ein Cermet aus Nickel, Palladium und Yttriumoxid ist.

10. Elektrode nach einem der Ansprüche 1 bis 9, dadurch gekennzeichnet, daß sich die gegebenenfalls beschichteten Fasern ununterbrochen von einem Ende zum anderen Ende der Rohre, Stäbe und Platten in deren Vorzugsrichtung erstrecken.

**Revendications**

1. Electrode régénérable à stabilité de forme pour l'emploi à haute température, notamment pour l'électrolyse de bains en fusion, constituée à partir d'une matière inorganique conductrice du courant électrique et d'au moins une matière électrochimiquement active, caractérisée par les points distinctifs suivants:

a)la matière inorganique conductrice du courant électrique se présente sous la forme de fibres;

b) les fibres sont assemblées en mèches, cordons, tissus et/ou feutres;

c) les fibres sont enrobées dans au moins une matière électrochimiquement active;

d) l'électrode a la forme de tiges, tubes et/ou plaques rassemblés par groupes, y compris des combinaisons de plaques et de tiges et/ou de tubes, ainsi que des combinaisons de tiges avec ces tubes;

e) la longueur des fibres est essentiellement orientée suivant la direction de passage du courant.

2. Electrode suivant la revendication 1, caractérisée en ce que l'enduit est constitué par une ou plusieurs couches, en particulier par des couches de recouvrement à double épaisseur.

3. Electrode suivant la revendication 1 ou 2, caractérisée en ce que sur les fibres est rapportée une couche intermédiaire adhésive qui augmente l'adhérence avec l'enduit de celles-ci ou avec la masse d'enrobage en matière électrochimiquement active.

4. Electrode suivant l'une des revendications 1 à 3, caractérisée en ce qu'au moins 40 % de la surface des fibres est recouverte par l'adhésif et ou la matière électrochimiquement active.

5. Electrode suivant l'une des revendications 1 à 4, caractérisée en ce que les fibres sont constituées à partir de:

a) carbone (C); ou

b) bore (B) et/ou carbure de silicium (SiC); ou

c) carbure de tantale (TaC) ou carbure de tungstène (Wc); ou

d) un mélange de carbone et d'un carbure de tantale sous-stoechiométrique ($TaC_{x\ à\ 1}$); ou

e) carbure de tantale sous-stoechiométrique ($TaC_{x\ à\ 1}$) et carbure de niobium sous-stoechiométrique ($NbC_{x\ à\ 1}$); ou

f) carbure de tantale sous stoechiométrique ($TaC_{x\ à\ 1}$) et carbure de niobium sous-stoechiométrique ($NbC_{x\ à\ 1}$) et carbone.

6. Electrode suivant la revendication 5, caractérisée en ce que la matière fibreuse se présente sous forme monocristalline ou polycristalline.

7. Electrode suivant l'une des revendications 1 à 6, caractérisée en ce que la matière électrochimiquement active de l'enduit des fibres et/ou de la masse d'enrobage est constituée par:

a) un carbure métallique, un borure métallique, un nitrure métallique et/ou un métal élémentaire; ou

b) le tantale, le carbure de tantale et/ou l'oxyde de tantale; ou

c) un ou plusieurs titanates de baryum de formule

$Ba(Pt_{0,1}Ti_{0,9})O_3$,

$Ba(Ru_{0,3}Ti_{0,7})O_3$,

$Ba(Pt_{0,2}Ti_{0,8})O_3$,

$Ba(Pd_{0,25}Ti_{0,75})O_3$; ou

d) un Cermet de deux métaux et un oxyde de métal de transition.

8. Electrode suivant la revendication 7, caractérisée en ce que la matière électrochimiquement active (d) est constituée par un Cermet de nickel, d'argent et d'oxyde d'yttrium.

9. Electrode suivant la revendication 7, caractérisée en ce que la matière électrochimiquement active (d) est constituée par un Cermet de nickel, de palladium et d'oxyde d'yttrium.

10. Electrode suivant l'une quelconque des revendications 1 à 9, caractérisée en ce que les fibres éventuellement enduites s'étendent suivant leur direction préférentielle sans interruption de l'une à l'autre des extrémités des tubes, tiges et plaques.

**Claims**

1. A regeneratable, shape-stable electrode for use at high temperatures, in particular for fusion electrolysis, consisting of an inorganic, the electric current conducting material and at least an electrically active material, characterized by the following features:

a) the inorganic, the electric current conducting material is configured to be fibres;

b) the fibres are arranged to be fibre bundles, cords, fabrics and/or felts;

c) the fibres are embedded in at least one electrochemically active material;

d) the electrode has the configuration of rods, pipes and/or plates combined in clusters, including combinations of plates and rods and/or pipes as well as combinations of rods with pipes;

f) the longitudinal direction of the fibres coincides substantially with the direction of current conduction.

2. Electrode according to claim 1, characterized in that the coating consists of one or more layers, in particular of double decked layers.

3. Electrode according to claim 1 or 2, characterized in that an adhesion-promoting intermediate layer is applied onto the fibres, which layer increases the adherence to the fibre coating or to the embedding composition made of electrochemically active material.

4. Electrode according to one of the claims 1—3, characterized in that at least 40 % of the fibre surfaces are covered with adhesion-promoter and/or a later chemically active material.

5. Electrode according to one of the claims 1—4, characterized in that the fibres consist of:

a) carbon (C); or

b) boron (B) and/or silicon carbide (SiC); or

c) tantalum carbide (TaC) or tungsten carbide (WC); or

d) a mixture of carbon and a low-stoichiometric tantalum carbide ($TaC_{x\ to\ 1}$); or

e) low-stoichiometric tantalum carbide ($TaC_{x\ to\ 1}$) and low-stoichiometric niobium carbide ($NbC_{x\ to\ 1}$); or

f) low-stoichiometric tantalum carbide ($TaC_{x\ to\ 1}$) and low-stoichiometric niobium carbide ($NbC_{x\ to\ 1}$) and carbon.

6. Electrode according to claim 5, characterized in that the fibre material is present in monocrystalline or polycrystalline form.

7. Electrode according to one of the claims 1—6, characterized in that the electrochemically active material of the fibre coating and/or the embedding composition consists of:

a) a metal carbide, metal boride, metal nitride and/or elementary metal; or

b) tantalum, tantalum carbide and/or tantalum oxide; or

c) individual ones or a plurality of barium titanates of the composition

$Ba(Pt_{0.1}Ti_{0.9})O_3$,

$Ba(Ru_{0.3}Ti_{0.7})O_3$,

$Ba(Pt_{0.2}Ti_{0.8})O_3$,

$Ba(Pd_{0.25}Ti_{0.75})O_3$; or

d) a cermet of two metals and a transition metal oxide.

8. Electrode according to claim 7, characterized in that the electrochemically active material (d) is a cermet consisting of nickel, silver and yttrium oxide.

9. Electrode according to claim 7, characterized in that the electrochemically active material (d) is a cermet consisting of nickel, palladium and yttrium oxide.

10. Electrode according to one of the claims 1—9, characterized in that the optionally coated fibres extend without interruption from one end to the other end of the pipes, rods and plates in the preferential direction thereof.

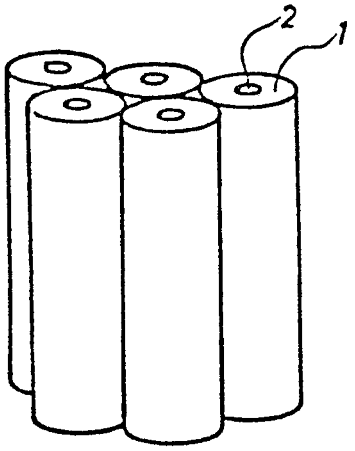


Fig. 1

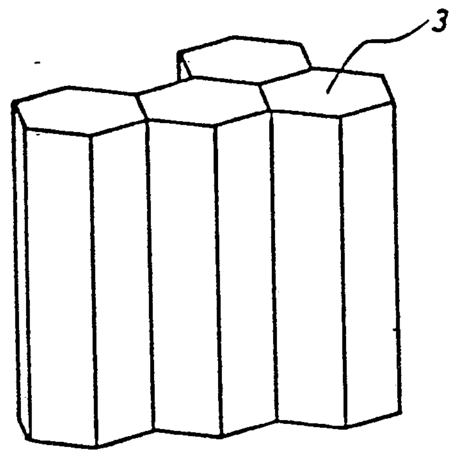


Fig. 2

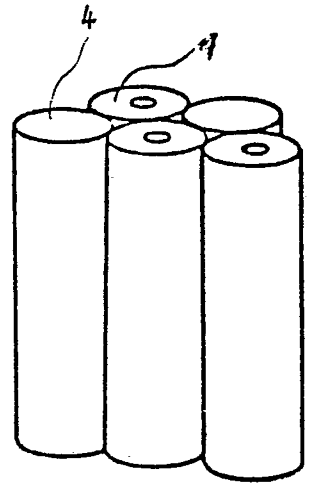


Fig. 3

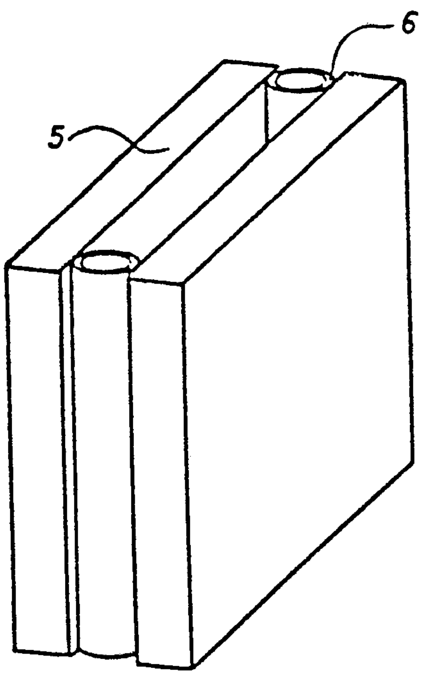


Fig. 4

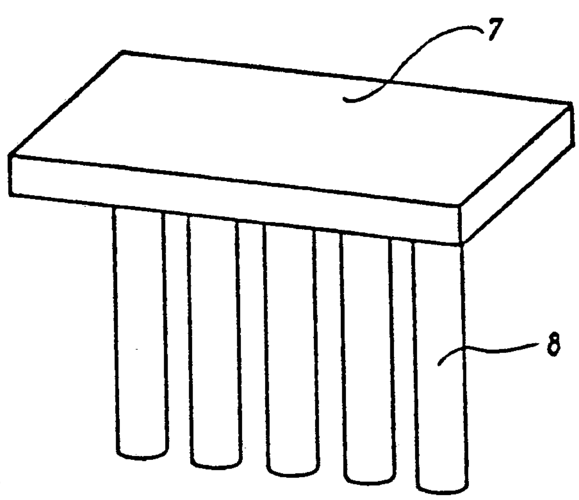


Fig. 5

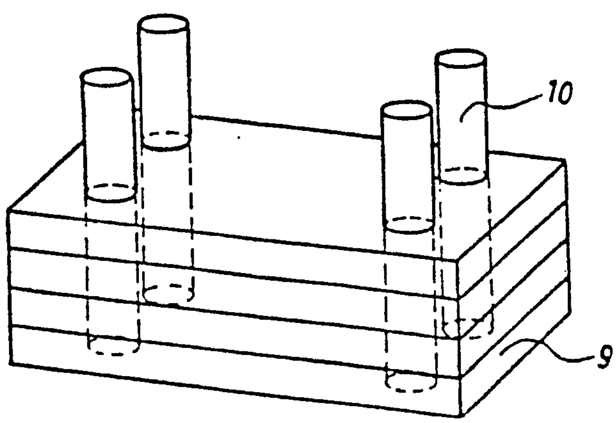


Fig. 6

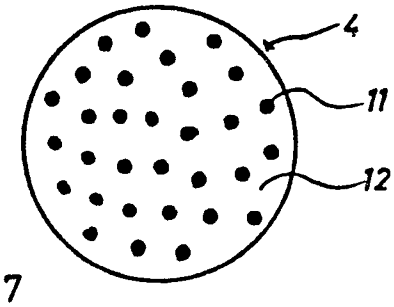


Fig. 7

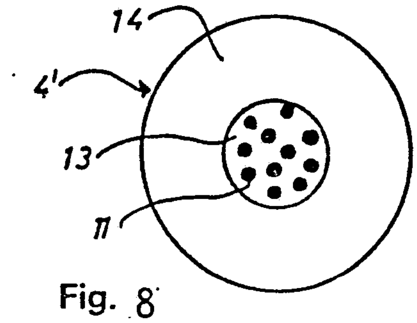


Fig. 8

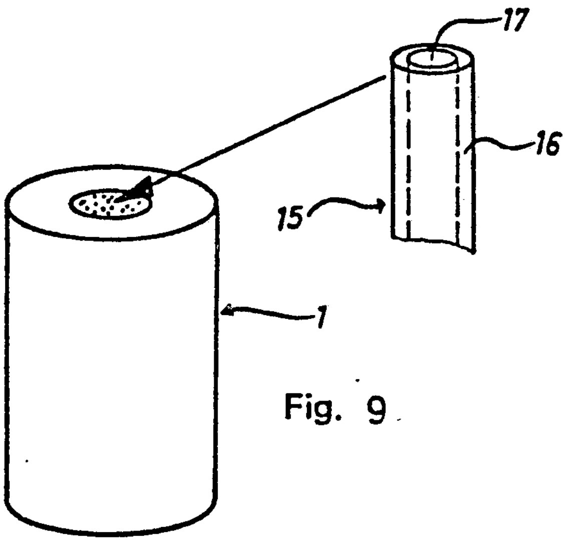


Fig. 9

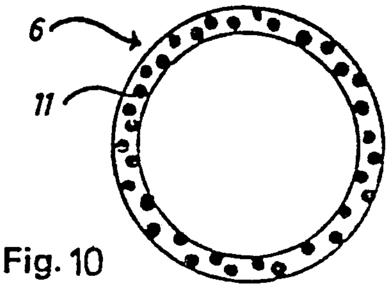


Fig. 10

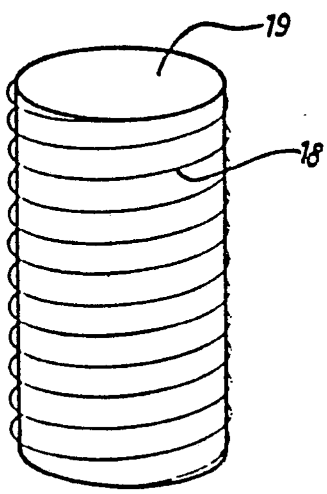


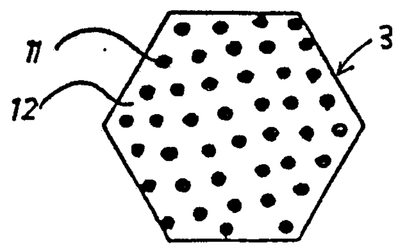


Fig. 11

Fig. 12